(19) Europäisches Patentamt
European Patent Office
Office européen des brevets

(11) EP 3 462 571 A1

(12) **EUROPEAN PATENT APPLICATION**

(43) Date of publication:
03.04.2019 Bulletin 2019/14

(51) Int Cl.:
*H02J 50/00* (2016.01)

(21) Application number: 17193645.3

(22) Date of filing: 28.09.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Koninklijke Philips N.V.
5656 AE Eindhoven (NL)

(72) Inventor: STARING, Antonius Adriaan Maria
5656 AE Eindhoven (NL)

(74) Representative: de Haan, Poul Erik et al
Philips International B.V.
Philips Intellectual Property & Standards
High Tech Campus 5
5656 AE Eindhoven (NL)

(54) **AUTHENTICATION IN A WIRELESS POWER TRANSFER SYSTEM**

(57) Authentication in a wireless power transfer system comprising a power receiver (105) and a power transmitter (101) wirelessly providing power to the power receiver (105) via an inductive power transfer signal is based on authentication key blocks in which encrypted copies of authentication keys are stored with the encryption being based on device keys. Both the power receiver (105) and the power transmitter (101) comprises an authentication key blocks representing respectively a first and second authentication key. Both devices generate authentication keys based on retrieving an encrypted authentication key copy stored in the authentication key block of the other device. Both devices decrypt the retrieved encrypted authentication key using their own device identity. Authentication is then based on verifying that both devices have successfully generated both authentication keys.

FIG. 2

## Description

FIELD OF THE INVENTION

The invention relates to authentication in a wireless power transfer system and in particular, but not exclusively, to authentication of both a power transmitter and a power receiver.

BACKGROUND OF THE INVENTION

Most present-day electrical products require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device. Although, the use of internal batteries may avoid the need for a wired connection to a power supply during use, this only provides a partial solution as the batteries will need recharging (or replacing). The use of batteries may also add substantially to the weight and potentially cost and size of the devices.

In order to provide a significantly improved user experience, it has been proposed to use a wireless power supply wherein power is inductively transferred from a transmitter inductor in a power transmitter device to a receiver coil in the individual devices. Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined and is currently being developed further. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Qi Specification is developed by the Wireless Power Consortium (WPC) and more information can e.g. be found on their website: http://www.wirelesspowerconsortium.com/index.html, where in particular the defined Specification documents can be found.

The Qi Specification, and indeed other similar standards, have been developed to allow interaction between power transmitters and power receivers from many different manufacturers. In order to identify products that comply with the standard, the WPC has created a Qi logo. Only products that have been registered with the WPC after successfully passing its compliance and interoperability testing are entitled to carry this logo. The WPC refers to these products as 'certified' products.

Uncertified products typically have been tested less thoroughly than certified products. Apart from a higher likelihood of exhibiting interoperability issues, uncertified products may also have a higher likelihood of exhibiting behavior that may cause damage to certified products. For example, a power transmitter may generate unexpectedly high voltages in a power receiver; or a power receiver may report unexpected power levels, effectively disabling the power transmitter's foreign object detection features.

It has been proposed that authentication can help power transmitters and power receivers to discriminate between certified and uncertified products. Upon detecting an uncertified product, a device can decide how to continue with the power transfer. If they are concerned with the risk of potential damage, for example, they can decide to engage the power transfer at a much lower power level than the maximum possible.

However, authentication in wireless power transfers systems such as Qi is very challenging due to the specific circumstances of such systems. For example, many devices may be relatively simple standalone devices that e.g. do not have built in remote communication functionality. This prevents conventional authentication approaches based on devices contacting a centralized authentication server as part of the authentication process. Another very significant challenge is that the communication channels between the power transmitter and the power receiver typically have a very low communication bandwidth. In addition, the bandwidth tends to be asymmetric in the two directions. For example, for Qi, the data rate from the power transmitter to the power receiver is typically in the order of 50-250 bps whereas the data rate from the power receiver to the power transmitter is in the order of 2 kbps.

An authentication method proposed to the WPC for standardization is the USB-C Authentication Specification that has been standardized for authentication for USB-C wired power transfer. This method relies on the exchange of device certificates and a public key based challenge response protocol. A disadvantage of this method is that it involves substantial data exchange between the devices which results in a very slow authentication. The reason is that the device certificates are relatively large (typically about 1.5 kB in size) and with the low bandwidth of, in particular, the power transmitter to power receiver communication channel during power transfer, this results in very long communication times in wireless power transfer systems. As a result, authentication times may often take several minutes which in practice requires the power transfer to start before authentication has finished. This is particularly disadvantageous since communication during power transfer typically suffers more from transmission errors than communication before the power transfer starts. The retransmission that is necessary to compensate for these errors further increase the time to complete the authentication.

Accordingly, an improved authentication for a wireless power transfer system would be advantageous and, in particular, an approach allowing increased flexibility, reduced cost, reduced complexity, improved authentication, faster authentication, improved reliability, reduced data rate requirements, and/or improved performance would be advantageous.

SUMMARY OF THE INVENTION

Accordingly, the Invention seeks to preferably mitigate, alleviate or eliminate one or more of the above mentioned disadvantages singly or in any combination.

According to an aspect of the invention there is provided a method of authentication for a wireless power transfer system comprising a power receiver and a power transmitter wirelessly providing power to the power receiver via an inductive power transfer signal, the power transmitter comprising a first communicator for communicating with the power receiver and the power receiver comprising a second communicator for communication with the power transmitter, the power transmitter having a first memory storing a first authentication key block comprising an encrypted representation of a first authentication key for each of a first plurality of device identities, an encrypted representation of the first authentication key for a device identity of the first plurality of device identities being encrypted by a device key linked to the device identity; the power receiver having a second memory storing a second authentication key block comprising an encrypted representation of a second authentication key for each of a second plurality of device identities, an encrypted representation of the second authentication key for a device identity of the second plurality of device identities being encrypted by a device key linked to the device identity;
the method comprising: the power transmitter performing the steps of: providing a decrypted first authentication key corresponding to the first authentication key; communicating with the power receiver to retrieve a first encrypted representation of the second authentication key from the second memory, the second encrypted representation of the second authentication key being an encrypted representation of the second authentication key of the second authentication key block for a device identity of the power transmitter; generating a decrypted second authentication key by decrypting the first encrypted representation of the second authentication key using a device key of the power transmitter; and the power receiver performing the steps of: providing a decrypted second authentication key corresponding to the second authentication key; communicating with the power transmitter to retrieve a second encrypted representation of the first authentication key from the first memory, the second encrypted representation of the first authentication key being an encrypted representation of the first authentication key of the first authentication key block for a device identity of the power receiver; generating a decrypted first authentication key by decrypting the second encrypted representation of the first authentication key using a device key of the power receiver; and a first device being one of the power transmitter and the power receiver generating a verification message based on the decrypted first authentication key and the decrypted second authentication key of the first device; the first device transmitting the verification message to a second device of the power transmitter and the power receiver; the second device determining whether an authentication of the first device has failed or succeeded in response to a verification of the verification message, the verification being based on the decrypted first authentication key and the decrypted second authentication key of the second device.

The invention may provide facilitated and/or improved authentication in a wireless power transfer system in many embodiments. In particular, the invention may provide an authentication approach suited for the specific requirements, conditions, and preferences for a wireless power transfer system.

The approach may allow secure authentication while requiring only very little communication between the devices (the power transmitter and the power receiver). The approach may be suitable for systems in which communication bandwidth between devices is restricted. The approach may in many embodiments be adapted to match asymmetric communication conditions as especially the verification may be adapted to have asymmetric communication requirements.

The authentication approach may be suitable for dynamic systems comprising many power receivers and power transmitters of different origins and manufacturing dates. It may allow for the authentication of the system to dynamically be updated to changed conditions without e.g. requiring all devices to be able to communicate with centralized servers. For example, it may support revocation of devices such that unauthorized devices cannot work with newer devices. This may be achieved without requiring any post-manufacturing modifications to the authentication functionality and while providing backwards compatibility with legacy devices.

The approach may provide a high degree of authentication security as authentication can be restricted to scenarios in which both devices are able to decrypt the encrypted authentication key retrieved from the authentication key block of the other device. Thus, in order for one device to authenticate the other device, it is required that the other device is both able to decrypt the encrypted authentication key provided by the authenticating device (and thus that it has the appropriate device key) and to provide an encrypted authentication key that can be decrypted by the authenticating device. Further, it requires that the authentication key blocks have the appropriate entries and thus e.g. that neither of the devices have been revoked at the time of generation (or updating) of either of the authentication key blocks.

The approach may be used by a power receiver to authenticate a power transmitter, by a power transmitter to authenticate a power receiver, or both. The devices may be arranged to modify the subsequent power transfer operation dependent on the outcome of the authentication verification. Specifically, in many embodiments, power transfer may be restricted when the authentication fails relative to when the authentication succeeds. For example, the power level may be restricted to a lower maximum level, or power transfer may only be initiated if the authentication is successful.

The decrypted first authentication key may be any unencrypted or non-encrypted representation of the first authentication key, and specifically need not be generated by the power transmitter by an explicit decryption operation. For example, in some embodiments, the power transmitter may store a clear, unencrypted copy of the first authentication key in the first memory and the power transmitter may simply provide the decrypted first authentication key by retrieving this authentication key.

The decrypted second authentication key may be any unencrypted or non-encrypted representation of the second authentication key, and specifically need not be generated by the power receiver by an explicit decryption operation. For example, in some embodiments, the power receiver may store a clear, unencrypted copy of the second authentication key in the second memory and the power receiver may simply provide the decrypted second authentication key by retrieving this authentication key.

In some embodiments and scenarios, the first device is the power transmitter and the second device is the power receiver. In some embodiments and scenarios, the first device is the power receiver and the second device is the power transmitter.

In accordance with an optional feature of the invention, the step of the power transmitter providing the decrypted first authentication key comprises: retrieving a first encrypted representation of the first authentication key from the first memory, the first encrypted representation of the first authentication key being an encrypted representation of the first authentication key of the first authentication key block for a device identity of the power transmitter; and generating the decrypted first authentication key by decrypting the first encrypted representation of the first authentication key using the device key of the power transmitter.

This may provide improved security while maintaining low complexity and low communication requirements in many embodiments.

In accordance with an optional feature of the invention, the power receiver providing the decrypted second authentication key comprises: retrieving a second encrypted representation of the second authentication key from the second memory, the second encrypted representation of the second authentication key being an encrypted representation of the second authentication key of the second authentication key block for a device identity of the power receiver; generating a decrypted second authentication key by decrypting the second encrypted representation of the second authentication key using the device key of the power receiver.

This may provide improved security while maintaining low complexity and low communication requirements in many embodiments.

In accordance with an optional feature of the invention, the method further comprises the step of designating the authentication as a failed authentication in response at least one of a detection that the first authentication key block does not comprise a valid encrypted representation of the first authentication key for the device identity of the power receiver; and a detection that the second authentication key block does not comprise a valid encrypted representation of the second authentication key for the device identity of the power transmitter.

The approach may provide an efficient approach for controlling authentication using authentication key blocks and specifically may provide an efficient approach for controlling authorized and revoked (or unauthorized) devices.

In accordance with an optional feature of the invention, the step of the power transmitter communicating with the power receiver to retrieve the first encrypted representation of the second authentication key comprises: the power receiver performing the steps of: retrieving the first encrypted representation of the second authentication key from the second authentication key block; generating a first message to include the first encrypted representation of the second authentication key retrieved from the second authentication key block; and transmitting the first message to the power transmitter and the power transmitter performing the steps of: receiving the first message; extracting the first encrypted representation of the second authentication key from the first message.

This may provide high performance while maintaining low complexity.

In accordance with an optional feature of the invention, the first device performs the steps of: generating a verification data sequence; generating a modified verification data sequence by applying a first modification operation to the verification data sequence based on the first authentication key and the second authentication key of the first device; including the modified verification data sequence in the verification message; the second device is arranged to extract a received modified verification data sequence from the received verification message; and determine that the authentication has succeeded in response to a detection that the received modified verification data sequence corresponds to applying the first modification operation to the verification data sequence based on the decrypted first authentication key and the decrypted second authentication key of the second device.

This may allow a highly efficient and accurate verification and thus authentication.

In accordance with an optional feature of the invention, the method further comprises the first device transmitting the verification data sequence to the second device.

This may allow a highly efficient and accurate verification and thus authentication.

In accordance with an optional feature of the invention, the first modification operation comprises an encryption of the verification data sequence based on the first authentication key and the second authentication key of the first device, and the second device detecting that the received modified verification data sequence corresponds to applying the first modification operation to the verification data sequence based on the first authentication key and the decrypted second authentication key of the second device comprises generating a decrypted verification data sequence by decrypting the received modified verification data sequence based on the first authentication key and the decrypted second authentication key of the second device, and comparing the decrypted verification data sequence to the verification data sequence.

This may provide a particularly advantageous verification and authentication.

In accordance with an optional feature of the invention, the second device performs the steps of: generating a second modified verification data sequence by applying a second modification operation to the verification data sequence based on the first authentication key and the second authentication key of the second device; including the second modified verification data sequence in a second verification message; and transmitting the second verification message to the first device; and the first device performs the steps of: receiving the second verification message; extracting a received second modified verification data sequence from the received second verification message; and determining that the authentication of the second device has succeeded in response to a detection that the received second modified verification data sequence corresponds to applying the second modification operation to the verification data sequence based on the decrypted first authentication key and the decrypted second authentication key of the first device.

This may provide a particularly advantageous verification and authentication.

In accordance with an optional feature of the invention, the second device is arranged to generate the verification data sequence by decrypting the first received modified verification data sequence based on the decrypted first authentication key and the decrypted second authentication key of the second device.

This may provide a particularly advantageous verification and authentication, and may in particular reduce the required communication bandwidth needed for verification.

In accordance with an optional feature of the invention, the first modification operation is a sequential encryption comprising a first encryption based on the decrypted first authentication key and a second encryption based on the decrypted second authentication key.

This may provide a particularly advantageous verification and authentication.

According to an aspect of the invention there is provided a method of authentication for a wireless power transmitter wirelessly providing power to a power receiver via an inductive power transfer signal, the power transmitter having a first memory storing a first authentication key block comprising an encrypted representation of a first authentication key for each of a first plurality of device identities, an encrypted representation of the first authentication key for a device identity of the first plurality of device identities being encrypted by a device key linked to the device identity;
the method comprising: providing a decrypted first authentication key corresponding to the first authentication key; communicating with the power receiver to retrieve a first encrypted representation of a second authentication key, the second encrypted representation of the second authentication key being an encrypted representation of the second authentication key of a second authentication key block for a device identity of the power transmitter, the second authentication key block comprising an encrypted representation of the second authentication key for each of a second plurality of device identities, an encrypted representation of the second authentication key for a device identity of the second plurality of device identities being encrypted by a device key linked to the device identity; generating a decrypted second authentication key by decrypting the first encrypted representation of the second authentication key using a device key of the power transmitter; receiving a verification message, the verification message comprising verification data; and determining whether an authentication of the power receiver has failed or succeeded in response to a verification of the verification data, the verification being based on the decrypted first authentication key and the decrypted second authentication key of the power transmitter.

According to an aspect of the invention there is provided a method of authentication for a wireless power receiver wirelessly receiving power from a power transmitter via an inductive power transfer signal, the power receiver having a memory storing a second authentication key block comprising an encrypted representation of a second authentication key for each of a second plurality of device identities, an encrypted representation of the second authentication key for a device identity of the second plurality of device identities being encrypted by a device key linked to the device identity; and the method comprising: providing a decrypted second authentication key corresponding to the second authentication key; communicating with the power transmitter to retrieve an encrypted representation of a first authentication key, the encrypted representation of the first authentication key being an encrypted representation of the first authentication key of a first authentication key block for a device identity of the power receiver, the first authentication key block comprising an encrypted representation of the first authentication key for each of a first plurality of device identities, an encrypted representation of the first authentication key for a device identity of the first plurality of device identities being encrypted by a device key linked to the device identity; generating a decrypted first authentication key by decrypting the encrypted representation of the first authentication key using a device key of the power receiver; receiving a verification message, the verification message comprising verification data; determining whether an authentication of the power transmitter has failed or succeeded in response to a verification of the verification data, the verification being based on the decrypted first authentication key and the decrypted second authentication key of the power receiver.

According to an aspect of the invention there is provided a wireless power transfer system comprising a power receiver and a power transmitter arranged to wirelessly provide power to the power receiver via an inductive power transfer signal, wherein: the power transmitter comprises: a first communicator for communicating with the power receiver; a first memory storing a first authentication key block comprising an encrypted representation of a first authentication key for each of a first plurality of device identities, an encrypted representation of the first authentication key for a device identity of the first plurality of device identities being encrypted by a device key linked to the device identity; and the power receiver comprises: a second communicator for communication with the power transmitter, a second memory storing a second authentication key block comprising an encrypted representation of a second authentication key for each of a second plurality of device identities, an encrypted representation of the second authentication key for a device identity of the second plurality of device identities being encrypted by a device key linked to the device identity; and the power transmitter is arranged to perform the steps of: providing a decrypted first authentication key corresponding to the first authentication key; communicating with the power receiver to retrieve a first encrypted representation of the second authentication key from the second memory, the second encrypted representation of the second authentication key being an encrypted representation of the second authentication key of the second authentication key block for a device identity of the power transmitter; generating a decrypted second authentication key by decrypting the first encrypted representation of the second authentication key using a device key of the power transmitter; and the power receiver is arranged to perform the steps of: providing a decrypted second authentication key corresponding to the second authentication key; communicating with the power transmitter to retrieve a second encrypted representation of the first authentication key from the first memory, the second encrypted representation of the first authentication key being an encrypted representation of the first authentication key of the first authentication key block for a device identity of the power receiver; generating a decrypted first authentication key by decrypting the second encrypted representation of the first authentication key using a device key of the power receiver; and wherein a first device being one of the power transmitter and the power receiver is arranged to generate a verification message based on the decrypted first authentication key and the decrypted second authentication key of the first device; the first device is arranged to transmit the verification message to a second device of the power transmitter and the power receiver; and the second device is arranged to determine whether an authentication of the first device has failed or succeeded in response to a verification of the verification message, the verification being based on the decrypted first authentication key and the decrypted second authentication key of the second device.

According to an aspect of the invention there is provided a power transmitter wirelessly for providing power to a power receiver via an inductive power transfer signal, the power transmitter comprising: a first memory storing a first authentication key block comprising an encrypted representation of a first authentication key for each of a first plurality of device identities, an encrypted representation of the first authentication key for a device identity of the first plurality of device identities being encrypted by a device key linked to the device identity; and an authenticator arranged to perform the steps of: providing a decrypted first authentication key corresponding to the first authentication key; communicating with the power receiver to retrieve a first encrypted representation of a second authentication key, the second encrypted representation of the second authentication key being an encrypted representation of the second authentication key of a second authentication key block for a device identity of the power transmitter, the second authentication key block comprising an encrypted representation of the second authentication key for each of a second plurality of device identities, an encrypted representation of the second authentication key for a device identity of the second plurality of device identities being encrypted by a device key linked to the device identity; generating a decrypted second authentication key by decrypting the first encrypted representation of the second authentication key using a device key of the power transmitter; receiving a verification message, the verification message comprising verification data; determining whether an authentication of the power receiver has failed or succeeded in response to a verification of the verification data, the verification being based on the decrypted first authentication key and the decrypted second authentication key of the power transmitter.

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which

FIG. 1 illustrates an example of elements of a power transfer system in accordance with some embodiments of the invention;
FIG. 2 illustrates an example of an authentication key block;
FIG. 3 illustrates an example of elements of a power transmitter in accordance with some embodiments of the invention;
FIG. 4 illustrates an example of elements of a power receiver in accordance with some embodiments of the invention;
FIG. 5 illustrates an example of some steps of an authentication process in accordance with some embodiments of the invention;
FIG. 6 illustrates an example of some steps of an authentication process in accordance with some embodiments of the invention;
FIG. 7 illustrates an example of some steps of an authentication process in accordance with some embodiments of the invention;
FIG. 8 illustrates an example of some steps and messages of an authentication process in accordance with some embodiments of the invention.

DETAILED DESCRIPTION OF SOME EMBODIMENTS OF THE INVENTION

The following description focuses on embodiments of the invention applicable to a wireless power transfer system utilizing a power transfer approach such as known from the Qi specification. However, it will be appreciated that the invention is not limited to this application but may be applied to many other wireless power transfer systems.

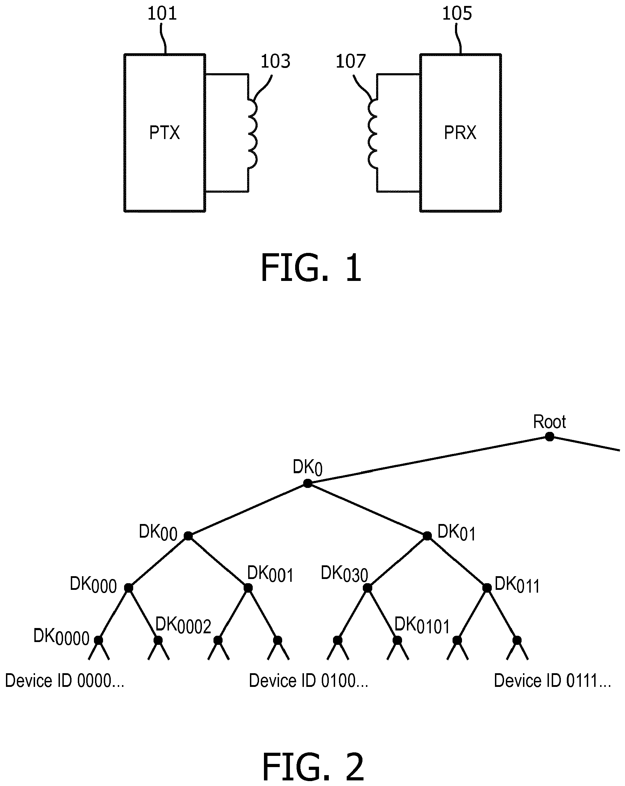

FIG. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an electromagnetic power transfer signal which may inductively transfer power from the power transmitter 101 to the power receiver 105. Specifically, the power transmitter 101 generates an electromagnetic signal, which is propagated as a magnetic flux by the transmitter coil or inductor 103. The power transfer signal may typically have a frequency between around 20 kHz to around 500 kHz, and often for Qi compatible systems typically in the range from 95 kHz to 205 kHz (or e.g. for high power kitchen applications, the frequency may e.g. typically be in the range between 20kHz to 80kHz). The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal/ magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element.

The system is arranged to transfer substantial power levels, and specifically the power transmitter may support power levels in excess of 500mW, 1W, 5W, 50W, 100W or 500W in many embodiments. For example, for Qi corresponding applications, the power transfers may typically be in the 1-5W power range for low power applications (the baseline power profile), up to 15W for Qi specification version 1.2 (extended power profile), in the range up to 100W for higher power applications such as power tools, laptops, drones, robots etc., and in excess of 100 W and up to more than 1000W for very high power applications, such as e.g. kitchen applications.

In the following, the operation of the power transmitter 101 and the power receiver 105 will be described with specific reference to an embodiment generally in accordance with the Qi Specification (except for the herein described (or consequential) modifications and enhancements) or suitable for the higher power kitchen specification being developed by the Wireless Power Consortium. In particular, the power transmitter 101 and the power receiver 105 may follow, or substantially be compatible with, elements of the Qi Specification version 1.0, 1.1 or 1.2 (except for the herein described (or consequential) modifications and enhancements).

Wireless power transfer systems based on standards such as Qi tend to be intended for a market place in which devices from many different manufacturers interwork efficiently and safely. In order to ensure such interoperation, it is necessary that the devices adhere very closely to the standards, and in many situations it is required that the devices have been approved by a suitable process. Typically, many standards involve a form of type approval to ensure that the standards are met. However, for widely adopted standards such as Qi, there is a risk that devices may be developed and marketed which do not fully follow the specifications of the standard and which have not been tested and approved. For example, rogue manufacturers may develop, produce, and market power transmitters that carry the Qi logo without meeting the specifications or having met type approval.

In order to reduce the risk of failure, incorrect operation, or even potential risks, it is desirable to include an authentication of devices, and specifically it is desirable if the power receiver can authenticate the power transmitter to check that it will operate fully in accordance with the appropriate specifications and has passed the required approval. Similarly, it is desirable for the power transmitter to authenticate the power receiver to ensure that this is fully compatible with the specifications.

However, authentication in a wireless power transfer system is a very challenging problem to address. One difficult restriction is that the power receiver, and in particular often the power transmitter, may not have any means for communicating with other devices (apart from the power receiver) and may typically not be capable of communicating with remote servers. For example, a power transmitter may be a single free-standing device connected only to a power source. Such limitations and complexity restrictions prevent the use of conventional authentication approaches based on accessing of a central authentication server or store.

Another substantial challenge is that the communication between the power transmitter and the power receiver typically has a very low bandwidth and it is therefore essential that the adopted authentication approach is one that reduces the data exchanges between the power transmitter and the power receiver as much as possible. Furthermore, in many systems the communication is asymmetric and often the bandwidth for communication from the power transmitter to the power receiver may be lower than from the power receiver to the power transmitter.

In the following, an advantageous approach for authentication in a wireless power transfer system will be described with reference to the system of FIG. 1.

The described approach of authentication is based on the use of authentication key blocks (AKBs). An authentication key block is associated with a given authentication key. The authentication key block comprises a plurality of encrypted versions/ copies/ representations of the authentication key with each encrypted version being encrypted by a different key. Further each encrypted version is associated with a specific device identity and/or group of device identities and is encrypted with a device key that is also associated with the device identity and/or group of device identities. Thus, the authentication key block may be accessed on the basis of a device identity or group of device identities and if the authentication key block comprises an entry for that device identity and/or group of device identities, it will be a representation of the authentication key which is encrypted by a device key linked to the device identity and/or group of device identities.

Thus, the authentication key block comprises encrypted versions of the same authentication key. However, the authentication key can only be obtained by a device that has access to the appropriate key used for the encryption of the individual encrypted representation. Each encrypted representation of the authentication key is linked to a device identity and/or group of device identities and is encrypted by a device key linked to the device identity and/or group of device identities. Therefore, a device is only able to retrieve the authentication key if it is in possession of a device identity for which an encrypted representation of the authentication key is stored in the authentication key block, and in possession of the device key for that device identity. The device keys may be provided to the individual devices by a trusted authority and is kept secret and specific to the individual device/ device identity (or group of device identities in some cases). Therefore, the individual device may access the authentication key block using its device identity and retrieve the encrypted representation of the authentication key. It can then decrypt the encrypted representation to retrieve the authentication key. However, any device which does not have a device identity for which the authentication key block comprises an entry or which does not have a corresponding device key is not able to retrieve the authentication key.

It should be noted that the device comprising the authentication key block does not generally have access to the device keys but only stores the encrypted representations of the authentication key with these encrypted representations typically having been generated by a trusted authority (e.g. they may be provided to individual manufacturers by a centralized authorization authority operated by the standards body responsible for the standard).

The approach accordingly allows the authentication key block to be widely distributed without compromising the integrity of the authentication key and with access to the authentication key still being restricted to only the intended devices. The approach allows the trusted authority to retain some control and flexibility over the authentication process. For example, if a rogue device is detected which uses an acceptable device identity and has access to the corresponding device key (i.e. the device key has been compromised), the trusted authority may revoke this device identity. Accordingly, the encrypted version of the authentication key will be removed from future authentication key blocks provided to genuine manufactures resulting in the rogue device not being able to operate with devices that are subsequently brought to the market. Further, the trusted authority may communicate with any deployed devices that are suitably equipped, and such devices may update their authentication key block to invalidate the encrypted representation of the authentication key for the revoked device identity (typically by simply deleting the entry and adding additional entries).

In many embodiments, an authentication key block may be implemented as a binary tree which contains multiple copies of an authentication key, each of which is encrypted with a device key. An example of such a structure is given in FIG. 2.

As a specific example, a trusted authority may maintain a binary tree of device keys (e.g. 128-bits each). The set of device keys are located at the nodes on a path from the root to a leaf in this tree, where the path determines the device's unique ID, i.e. the device identity. The device keys are intended to be kept secret by the device and therefore the corresponding encrypted version of the authentication key can only be recovered by the specific device allocated that device identity and device key(s). If the device keys somehow become known, the trusted authority revokes the compromised device identity thus preventing a rogue device from retrieving the authentication key by using this device identity.

An example of an authentication key block based on a binary tree is provided in FIG. 2. In the specific example, only device 0100... is revoked. The authentication key block contains copies of the authentication key encrypted with device keys $DK_{00}$, $DK_{011}$, $DK_{0101}$. In addition, the authentication key block contains a data structure conveying which device key encrypts which copy the authentication key, i.e. in the example, the data structure inherently implements the ordering by device identities. By processing this data structure, a device can find the appropriate encrypted copy and the appropriate device key to decrypt it.

The authentication key block often contains additional information such as the date and time when the trusted authority generated it, and the trusted authority's signature. The latter provides the means for verifying the integrity of the authentication key block, e.g. when it reaches the device from the trusted authority.

Principles corresponding to such authentication key blocks has found use in systems wherein access to a media carrier, such as a DVD, is restricted to authorized media players. In such systems, an authentication key block may be included on the media carrier with the authentication key of the authentication key block being required to decrypt data on the media carrier. Only a media player having a device key corresponding to one of the entries in the authentication key block can access the data on the media carrier. An example of an authentication approach using authentication key blocks can be found in WO 2002060116 A2.

The Inventor has realized that an authentication approach based on authentication key blocks can be used for a wireless power transfer system and if designed carefully can provide highly advantageous performance particularly suited for the particular requirements of a wireless power transfer system.

The approach may allow for a power transmitter to authenticate a power receiver, a power receiver to authenticate a power transmitter, or in most embodiments advantageously both authentications may be performed i.e. both the power receiver and the power transmitter may be authenticated by the other device.

In the approach both the power transmitter and the power receiver is provided with an authentication key block and the authentication is based on both of these blocks. The approach specifically involves both the power transmitter and the power receiver generating local copies of both the authentication key of the authentication key block of the power transmitter and of the authentication key of the authentication key block of the power receiver. One or more messages are then generated based on the two authentication keys by one of the devices and checked by the other device using both authentication keys. This allows the devices to demonstrate to each other that they have successfully decrypted both authentication keys, and thus demonstrates that both devices are valid in both authentication key blocks. This is only possible if both devices are correctly included in both authentication key blocks, and specifically is not possible if either of the devices has been revoked in either of the authentication key blocks. The approach thus provides a high degree of security. Furthermore, the approach can be performed with a very high degree of efficiency and requires very little data exchange between the two devices. The approach is thus closely adapted to the restrictions provided by communication bandwidth restrictions between the two devices present in wireless power transfer systems.

The approach is thus based on the authentication reflecting the status of both authentication key blocks, i.e. the system will effectively prevent authentication for both the power receiver and the power transmitter if either of the devices has an authentication key block that does not validate the other device. In contrast to conventional approaches used e.g. for media carrier authentication, a symmetric approach is used with double certification thereby preventing that a single rogue device can successfully authenticate the power transmitter/power receiver pairing.

The approach may for example prevent conflict, and conflict resolution, between the different authentication key blocks of the two devices. In many systems, the authentication key blocks are embedded in the devices at manufacturing time and may for some devices be updateable, e.g. by means of a standardized or proprietary protocol. Accordingly, authentication key blocks in different devices may be different and may reflect the set of authorized devices at different times, and thus may reflect different sets of authorized devices. An approach based on using the most up-to-date authentication key block may be considered to be the best approach and may allow more recent authentication key block to be distributed, and e.g. information about revoked devices may be distributed. However, such an approach is less suitable for wireless power transfer systems due to the increased communication requirements. Indeed, after only a few revocations-or even a single revocation-the size of the authentication key block typically results in the communication bandwidth required being so high that it is not feasible to exchange authentication key blocks between devices. This may be avoided using the current approach. Indeed, the current approach may completely avoid the step of determining which of the two authentication key blocks to use for authentication, and instead is based on an approach where both authentication key blocks are used for each authentication. This ensures that the most up-to-date authentication key block is always part of the authentication. A significant advantage of this approach is that it removes the need to exchange the authentication key blocks and accordingly only a relatively small amount of information needs to be exchanged between the two devices. This allows the authentication process to complete in a relatively short amount of time, typically in seconds rather than minutes.

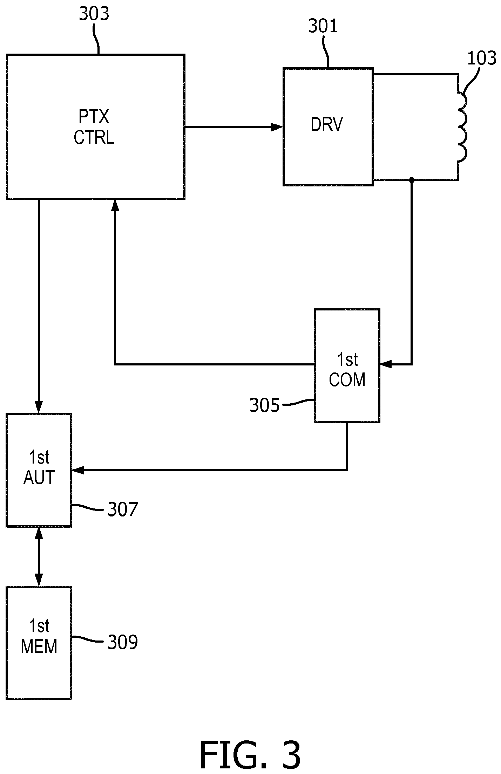

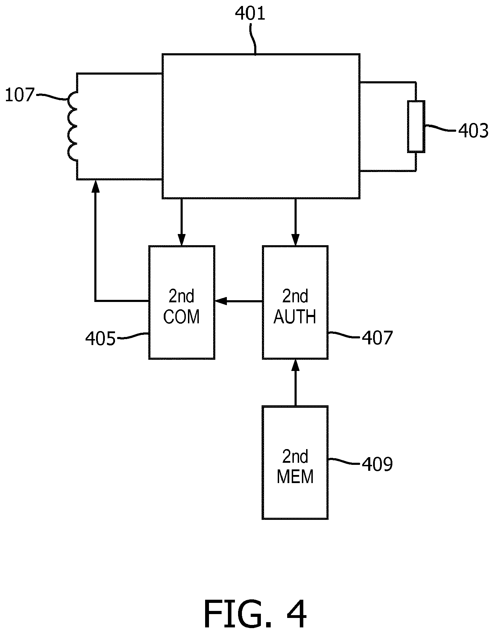

In the following an exemplary embodiment of the authentication will be described with reference to FIG. 3 which illustrates elements of the power transmitter 101 of FIG. 1 in more detail and FIG. 4 which illustrates elements of the power receiver 105 of FIG. 1 in more detail.

The power transmitter 101 includes a driver 301 which can generate a (power transfer) drive signal that is fed to the transmitter coil 103 which in return generates the electromagnetic power transfer signal thereby providing a power transfer to the power receiver 105.

The power transmitter 101 further comprises a power transmitter controller 303 which is arranged to control the operation of the power transmitter 101 in accordance with the desired operating principles. Specifically, the power transmitter 101 may include many of the functionalities required to perform power control in accordance with the Qi Specifications.

The power transmitter controller 303 is in particular arranged to control the generation of the drive signal by the driver 301, and it can specifically control the power level of the drive signal, and accordingly the level of the generated power transfer signal. The power transmitter controller 303 comprises a power loop controller controlling a power level of the power transfer signal in response to the power control messages received from the power receiver 105 during the power control phase.

In order to exchange data and messages with the power receiver 105, the power transmitter 101 comprises a first communicator 305.

The first communicator 305 is arranged to receive data and messages from the power receiver 105 (as will be appreciated by the skilled person, a data message may provide one or more bits of information). In the example, the power receiver 105 is arranged to load modulate the power transfer signal generated by the transmitter coil 103, and the first communicator 305 is arranged to sense variations in the voltage and/or current of the transmitter coil 103 and to demodulate the load modulation based on these. The skilled person will be aware of the principles of load modulation, as e.g. used in Qi wireless power transfer systems, and therefore these will not be described in further detail.

The first communicator 305 is further arranged to transmit data and messages to the power receiver 105. In the example, this may be done by modulating the power transfer signal to reflect the data to be communicated. For example, the first communicator 305 may frequency, phase, or amplitude modulate the power transfer signal as will be known to the skilled person.

In some embodiments, communication may be performed using a separate communication channel which may be achieved using a separate communication coil, or indeed using the transmitter coil 103. For example, in some embodiments Near Field Communication may be implemented or a high frequency carrier (e.g. with a carrier frequency of 13.56 MHz) may be overlaid on the power transfer signal.

The power transmitter 101 further comprises a first authenticator 307 which is arranged to support an authentication process. The authentication process may be an authentication of the power transmitter by a power receiver and/or may be an authentication of the power receiver by the power transmitter. The authentication is based on a first authentication key block and accordingly the power transmitter 101 comprises a first memory 309 in which the first authentication key block is stored.

The first authentication key block is associated with a first authentication key and comprises a plurality of encrypted representations (copies/ versions) of this with each encrypted representation being encrypted by a specific device key. Each representation is thus linked with a device identity and/or a group of device identities and each of the device identities and/or group of device identities is further linked with a device key. The power transmitter will thus store the first authentication key block and the encrypted representations of the first authentication key. However, it does not have access to any of the device keys except for any device key linked to a device identity allocated to the power transmitter itself.

The authentication key block may be provided from a trusted authority in a suitable way and at an appropriate time. In many embodiments, the first authentication key block may be stored in the first memory 309 during manufacture.

The authentication process will be described in more detail later.

FIG. 4 illustrates some exemplary elements of the power receiver 105 of FIG. 1.

The receiver coil 107 is coupled to a power receiver controller 401 which couples the receiver coil 107 to a load 403. The power receiver controller 401 includes a power control path which converts the power extracted by the receiver coil 107 into a suitable supply for the load 403. In addition, the power receiver controller 401 may include various power receiver controller functionality required to perform power transfer, and in particular functions required to perform power transfer in accordance with the Qi specifications.

In order to support communication from the power receiver 105 to the power transmitter 101 the power receiver 105 comprises a second communicator 405. The second communicator 405 is arranged to communicate messages with the power transmitter 101. The second communicator 405 may specifically transmit messages to the power transmitter 101 by load modulating the power transfer signal. Thus, the second communicator 405 may vary the loading of the receiver coil 107 in response to data to be transmitted to the power transmitter 101. The load variations are then detected and demodulated by the power transmitter 101 as will be known to the person skilled in the art.

Similarly, the second communicator 405 may e.g. detect amplitude, phase, and/or frequency modulation of the power transfer signal and demodulate corresponding data transmitted to the power receiver 105 from the power transmitter 101.

As previously mentioned, in some embodiments, communication between the power transmitter 101 and power receiver 105 may use a different communication channel that does not involve the power transfer signal.

The power receiver 105 further comprises a second authenticator 407 which is arranged to support the authentication process. The authentication is based on a second authentication key block and accordingly the power receiver 105 comprises a second memory 409 in which the second authentication key block is stored.

The second authentication key block is associated with a second authentication key and comprises a plurality of encrypted representations (copies/ versions) of this with each encrypted representation being encrypted by a specific device key. Each representation is thus linked with a device identity and/or group of device identities and each of the device identities and/or group of device identities is further linked with a device key. The power receiver will thus store the second authentication key block and the encrypted representations of the second authentication key. However, it does not have access to any of the device keys except for any device key linked to a device identity allocated to the power receiver itself. The second authentication key block may be provided from a trusted authority in a suitable way and at an appropriate time. In many embodiments, the second authentication key block may be stored in the second memory 409 during manufacture.

An example, the authentication process will be described in more detail later. In the description, the following representations will be used:

$AK_p$ the first (primary) authentication key, i.e. the authentication key represented in the first authentication key block stored in the power transmitter.

$AK_s$ the second authentication key, i.e. the authentication key represented in the second authentication key block stored in the power receiver.

$UID_p$ the device identity of the power transmitter.

$UID_s$ the device identity of the power receiver.

$E_n[AK_p]$ the encrypted representation of the first authentication key for device identity n, i.e. the encrypted entry of the first authentication key stored in the first authentication key block and encrypted by the device key provided for device identity n.

$E_m[AK_s]$ the encrypted representation of the second authentication key for device identity m, i.e. the encrypted entry of the second authentication key stored in the second authentication key block and encrypted by the device key provided for device identity m.

$D_n[E_n[AK_p]]$ the decrypted representation of the first authentication key for device identity n, i.e. the result of decrypting the encrypted entry of the first authentication key stored in the first authentication key block and encrypted by the device key provided for device identity n. For correct decryption (i.e. if the device key used for decryption matches that used for encrypting $AK_p$) then:

$$D_n[E_n[AK_p]] = AK_p$$

$D_n[E_n[AK_s]]$ the decrypted representation of the second authentication key for device identity n, i.e. the result of decrypting the encrypted entry of the second authentication key stored in the second authentication key block in the power receiver and encrypted by the device key provided for device identity n. For correct decryption (i.e. if the device key used for decryption matches that used for encrypting $AK_s$) then:

$$D_n[E_n[AK_s]] = AK_s$$

When the authentication process is initiated, the power transmitter stores the first authentication key block and accordingly comprises encrypted representations of the first authentication key $AK_p$ for a number of device identities, i.e. it has stored $E_n[AK_p]$ for a number of different device identities n. In addition, it has information of its own device identity $UID_p$ and of the corresponding device key(s). However, it has no information of the power receiver's device identity $UID_s$ or of the corresponding device key(s).

Similarly, the power receiver has stored the second authentication key block and accordingly comprises encrypted representations of the second authentication key AKS for a number of device identities, i.e. it has stored $E_n[AK_s]$ for a number of different device identities n. In addition, it has information of its own device identity $UID_s$ and of the corresponding device key(s). However, it has no information of the power transmitter's device identity UIDp or of the corresponding device key(s).

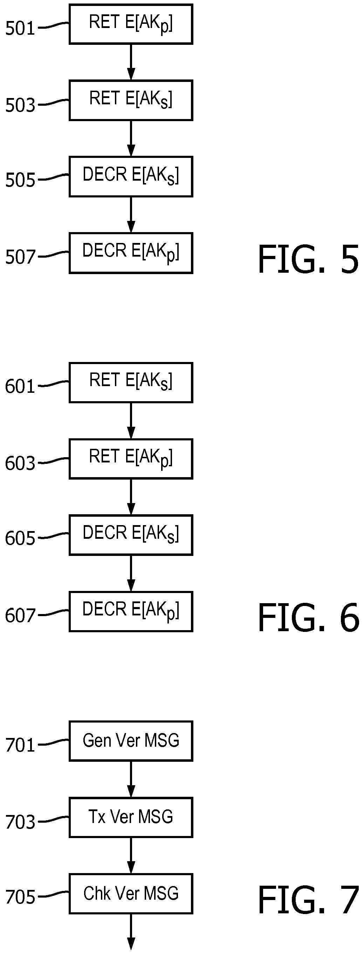

FIG. 5 illustrates a number of steps that the power transmitter 101 may perform in order to generate local unencrypted representations/copies of both the first and second authentication keys, $AK_p$ and $AK_s$.

The power transmitter may in step 501 retrieve a first encrypted representation of the first authentication key from the first memory. The first encrypted representation is specifically the encrypted representation that is stored for the device identity of the power transmitter. Thus, in the specific example, the first authenticator 307 is arranged to extract $E_n[AK_p]$ from the first memory where n= $UID_p$ thus the first authenticator 307 retrieves

$$E_{UIDp}[AK_p]$$

from the first memory 309.

For example, in many embodiments, the first authentication key block may be stored in the first memory such that the address for a given encrypted representation is given by the corresponding device identity. Accordingly, the power transmitter may determine the address corresponding to its device identity, i.e. $UID_p$, and retrieve the encrypted authentication key stored at that location (i.e. this will be the encrypted representation of the first authentication key for the device identity of the power transmitter, $E_{UIDp}[AK_p]$).

In step 503, the first authenticator 307 proceeds to retrieve a first encrypted representation of the second authentication key from the second memory, i.e. from the memory of the power receiver. The first encrypted representation is specifically the encrypted representation of the second authentication key that is stored for the device identity of the power transmitter. Thus, in the specific example, the first authenticator 307 is arranged to extract $E_n[AK_s]$ from the second memory where n= $UID_p$, thus the first authenticator 307 retrieves

$$E_{UIDp}[AK_s]$$

from the second memory 409.

In step 503, the first authenticator 307 thus retrieves an encrypted representation of the second authentication key, i.e. the authentication key of the authentication key block of the power receiver, where the encryption is performed using the device identity of the power transmitter, i.e. $UID_p$.

In order to do so, the power transmitter communicates with the power receiver and specifically the first communicator 305 may exchange appropriate messages with the second communicator 405 in order for this decrypted representation to be retrieved, Specifically, the first authenticator 307 may cause the first communicator 305 to transmit a first request message to the second communicator 405. The first request message may comprise the device identity of the power transmitter, i.e. it may comprise $UID_p$. Upon receiving the first request message, the power receiver may access the second memory 409 to retrieve the first encrypted representation of the second authentication key from the second authentication key block. For example, it may determine the address in the second memory 409 at which the encrypted representation of the second authentication key is stored and retrieve this. For example, upon receiving the first request message, the second authenticator 407 may access the second memory 409 and retrieve $E_{UIDp}[AK_s]$. The second communicator 405 may then generate a first response message which comprises this $E_{UIDp}[AK_s]$ and transmit this message to the power transmitter. When the first response message is received, the first communicator 305 may extract the first encrypted representation of the second authentication key, $E_{UIDp}[AK_s]$.

Thus, at the end of step 503, the first authenticator 307 of the power transmitter has encrypted versions of both the first authentication key ($AK_p$, the authentication key of the authentication key block stored in the power transmitter) and the second authentication key (AKs, the authentication key of the authentication key block stored in the power receiver).

The first authenticator 307 then proceeds in step 505 to decrypt the first encrypted representation of the first authentication key, $E_{UIDp}[AK_p]$. The encryption of this representation is on the basis of the device identity of the power transmitter, and accordingly the power transmitter can decrypt the representation using the device key associated with its device identity $UID_p$. Thus, in step 505 this decryption is performed, generating

$$D_{UIDp}[E_{UIDp}[AK_p]]$$

which in the case of the decryption being successful yields:

$$AK_p.$$

The first authenticator 307 then proceeds in step 507 to decrypt the first encrypted representation of the second authentication key, $E_{UIDp}[AK_s]$. The encryption of this representation is on the basis of the device identity of the power transmitter, and accordingly the power transmitter can decrypt the representation using the device key of its device identity $UID_p$. Thus, in step 507 this decryption is performed, generating

$$D_{UIDp}\left[E_{UIDp}\left[AK_s\right]\right]$$

which in the case of the decryption being successful yields:

$$AK_s.$$

At the end of the process, and assuming that no errors have occurred and that both authentication key blocks contain valid representations of the respective authentication key, the first authenticator 307 accordingly has derived local representations of both the first and second authentication keys, $AK_p$ and $AK_s$.

In brief notation, the approach of FIG. 5 may be described by the following example:

Step 501: retrieve $E_{UIDp}[AK_p]$
Step 503: retrieve $E_{UIDp}[AK_s]$
Step 505: generate $D_{UIDp}[E_{UIDp}[AK_p]] = AK_p$
Step 507: generate $D_{UIDp}[E_{UIDp}[AK_s]] = AK_s$

FIG. 6 illustrates a number of steps that the power receiver 105 may perform in order to generate local unencrypted representations/copies of both the first and second authentication keys, $AK_p$ and $AK_s$. The method corresponds closely to that of FIG. 5 and indeed in many embodiments, essentially the same approach may be used by the power transmitter and the power receiver in order to generate local representations of the first and second authentication keys, $AK_p$ and $AK_s$.

The power receiver may in step 601 retrieve a second encrypted representation of the second authentication key from the second memory. The second encrypted representation is specifically the encrypted representation that is stored in the power receiver for the device identity of the power receiver. Thus, in the specific example, the second authenticator 407 is arranged to extract $E_n[AK_s]$ from the first memory where n= $UID_s$ thus the second authenticator 407 retrieves

$$E_{UIDs}[AK_s]$$

from the second memory 409.

For example, in many embodiments, the second authentication key block may be stored in the second memory such that the address for a given encrypted representation is given by the corresponding device identity. Accordingly, the power receiver may determine the address corresponding to its device identity, i.e. $UID_s$, and retrieve the encrypted authentication key stored at that location (i.e. this will be the encrypted representation of the first authentication key for the device identity of the power receiver, $E_{UIDs}[AK_s]$).

In step 603, the second authenticator 407 proceeds to retrieve a second encrypted representation of the first authentication key from the first memory, i.e. from the memory of the power transmitter. The second encrypted representation is specifically the encrypted representation of the first authentication key that is stored for the device identity of the power receiver. Thus, in the specific example, the second authenticator 407 is arranged to extract $E_n[AK_p]$ from the first memory where n= $UID_s$, thus the second authenticator 407 retrieves

$$E_{UIDs}[AK_p]$$

from the first memory 409.

In step 603, the second authenticator 407 thus retrieves an encrypted representation of the first authentication key, i.e. the authentication key of the authentication key block of the power transmitter, where the encryption is performed using the device identity of the power receiver, i.e. $UID_s$. In order to do so, the power receiver communicates with the power transmitter and specifically the second communicator 405 may exchange appropriate messages with the first communicator 305 in order for this decrypted representation to be retrieved, Specifically, the second authenticator 407 may cause the second communicator 405 to transmit a second request message to the first communicator 305. The second request message may comprise the device identity of the power receiver, i.e. it may comprise $UID_s$. Upon receiving the second request message, the power transmitter may access the first memory 309 to retrieve the second encrypted representation of the first authentication key from the first authentication key block. For example, it may determine the address in the first memory 309 at which the encrypted representation of the first authentication key is stored and retrieve this. For example, upon receiving the second request message, the first authenticator 307 may access the first memory 309 and retrieve $E_{UIDs}[AK_p]$, The first communicator 305 may then generate a second response message which comprises this $E_{UIDs}[AK_p]$ and transmit this message to the power receiver. When the second response message is received, the second communicator 405 may extract the second encrypted representation of the first authentication key, $E_{UIDs}[AK_p]$.

Thus, at the end of step 603, the second authenticator 407 of the power receiver has encrypted versions of both the first authentication key ($AK_p$, the authentication key of the authentication key block stored in the power transmitter) and the second authentication key (AKs, the authentication key of the authentication key block stored in the power receiver).

The second authenticator 407 then proceeds in step 605 to decrypt the second encrypted representation of the first authentication key, $E_{UIDs}[AK_p]$. The encryption of this representation is on the basis of the device identity of the power receiver, and accordingly the power receiver can decrypt the representation using its device identity $UID_s$. Thus, in step 605 this decryption is performed, generating

$$D_{UIDs}\left[E_{UIDs}\left[AK_p\right]\right]$$

which in the case of the decryption being successful yields:

$$AK_p.$$

The second authenticator 407 then proceeds in step 607 to decrypt the second encrypted representation of the second authentication key, $E_{UIDs}[AK_s]$. The encryption of this representation on the basis of the device identity of the power receiver, and accordingly the power receiver can decrypt the representation using its device identity $UID_s$. Thus, in step 607 this decryption is performed, generating

$$D_{UIDs}\left[E_{UIDs}\left[AK_s\right]\right]$$

which in the case of the decryption being successful yields:

$$AK_s.$$

At the end of the process, and assuming that no errors have occurred and that both authentication key blocks contain valid representations of the respective authentication keys, the second authenticator 407 accordingly has derived local representations of both the first and second authentication keys, $AK_p$ and $AK_s$.

In brief notation, the approach of FIG. 6 may be described by the following example:

Step 601: retrieve $E_{UIDs}[AK_s]$
Step 603: retrieve $E_{UIDs}[AK_p]$
Step 605: generate $D_{UIDs}[E_{UIDs}[AK_p]] = AK_p$
Step 607: generate $D_{UIDs}[E_{UIDs}[AK_s]] = AK_s$

It will be appreciated that the steps of FIGs. 5 and 6 need not be performed in the specific order illustrated by the specific examples. For example, the steps of retrieving respectively a local and remote encrypted authentication key may be different, and/or decryption may be in the opposite order. As another example, the retrieval and decryption of the authentication key from the local authentication key block may be performed prior to the initialization of an authentication, or indeed even before there is any detection of the complementary device. It will also be appreciated that the steps of the power receiver and the power transmitter may be interleaved or dependent on each other, or may e.g. be performed fully (or partially) in parallel.

In the example of FIG. 5, the decrypted first au-

thentication key $AK_p$ is generated by first retrieving the first encrypted representation of the first authentication key $[E_{UIDp}[AK_p]]$ and then decrypting this to generate $D_{UIDp}[E_{UIDp}[AK_p]] = AK_p$. Although this may be advantageous in many scenarios, the first authentication key $AK_p$ may in other embodiments be generated by other means. For example, in some embodiments, the first authentication key $AK_p$ may simply be provided to the power transmitter as a non-encrypted authentication key and this may be stored and retrieved when required without needing any authentication key block to be accessed or any decryption to be performed. Thus, the first authenticator 307 may simply provide the first authentication key $AK_p$ by reading it from memory. Thus, steps 501 and 505 may simple be replaced by a single step of providing a decrypted (i.e. clear or unencrypted) first authentication key $AK_p$.

Similarly, in the example of FIG. 6, the decrypted second authentication key $AK_s$ is generated by first retrieving the second encrypted representation of the second authentication key $[E_{UIDs}[AK_s]]$ and then decrypting this to generate $D_{UIDs}[E_{UIDs}[AK_s]] = AK_s$. Although this may be advantageous in many scenarios, the second authentication key $AK_s$ may in other embodiments be generated by other means. For example, in some embodiments, the first authentication key $AK_s$ may simply be provided to the power receiver as a non-encrypted authentication key and this may be stored and retrieved when required without needing any authentication key block to be accessed or any decryption to be performed. Thus, the second authenticator 407 may simple provide the second authentication key $AK_s$ by reading it from memory. Thus, steps 601 and 607 may simple be replaced by a single step of providing a decrypted (i.e. clear or unencrypted) second authentication key $AK_s$.

Thus, in some embodiments, one or both of the local authentication keys is generated by accessing a local authentication key block and extracting an encrypted representation of the local authentication key. The local authentication key can then be generated by decrypting the encrypted representation. However, in some embodiments, the local authentication key may be provided by other means, and indeed may be provided without relying or resorting to any authentication key block access or decryption. Each device may for example simply store a copy of its authentication key. This authentication key may already be as a clear (decrypted/ unencrypted) representation that can be used directly.

At the end of the processes of FIGs. 5 and 6, the power receiver and the power transmitter may accordingly both have generated local copies of both the first and second authentication keys, i.e. both may have generated $AK_p$ and $AK_s$. However, in order to do so, it is required that both authentication key blocks comprise valid encrypted representations of their respective authentication key for the device identities of the other device. If, for example, the first authentication key block (of the power transmitter) does not comprise a validly encrypted representation of the first authentication key for the device identity of the power receiver, then the power receiver will not be able to create a copy of the first authentication key. Similarly, if the second authentication key block (of the power receiver) does not comprise a validly encrypted representation of the second authentication key for the device identity of the power transmitter, then the power transmitter will not be able to create a copy of the second authentication key.

This may for example prevent that a non-authorized authentication key block is used by a device. Indeed, in order for a decryption of a retrieved encrypted authentication key to be successful, it is necessary for the encryption to have been based on the correct device key. However, as this key is only known by the specific device and the trusted authority generating the authentication key block, the approach can safeguard against false authentication key blocks being generated and used by rogue devices.

Further, the approach allows for the system to be able to revoke devices. For example, if power transmitter has been compromised such that its device identity and device keys have been found to be used by a rogue power transmitter, new power receivers may be generated for which the corresponding entry of the authentication key block has been revoked. Thus, in this case, the power receiver will not have any (valid) entry for the compromised device identity, and accordingly it will not be possible for the rogue power transmitter to generate a copy of the authentication key of the power receiver (i.e. $AK_s$).

In many systems, revoked identities may be distributed through communication or e.g. by exchange of revocation information between valid power receivers and power transmitters when used together (e.g. after authentication and during the power transfer, the dates of authentication key blocks may be compared and information may be exchanged from the newest authentication key block allowing the oldest authentication key block to be updated accordingly). However, even in cases where there is no facility for updating authentication key blocks, the approach may often provide sufficient protection against rogue devices. For example, a rogue power transmitter will be substantially less marketable if it cannot be used with new power receivers, and thus will only work with an increasingly small subset of deployed power receivers.

In many embodiments, the power transmitter and/or the power receiver may be arranged to designate the authentication to have failed if it is detected that a valid encrypted representation of the first authentication key is not present in the first authentication key block and/or if a valid encrypted representation of the second authentication key is not present in the second authentication key block. This may often be the case if the corresponding device identity has been revoked and therefore the authentication key block does not include a key for that device identity at all. Alternatively, the authentication key block may still include an encrypted representation of the corresponding authentication key, but a flag or other indication may be provided which indicates that this is not valid. In some embodiments, the encrypted representation of an authentication key is not valid if it is not encrypted by the correct device identity.

As an example, the power receiver may transmit a message to the power transmitter to request an encrypted representation of the first authentication key for the device identity of the power receiver. The power transmitter may proceed to access the first memory to retrieve the corresponding encrypted representation from the first authentication key block. However, if no such entry exists, e.g. due to the power receiver device identity being revoked, the power transmitter may designate the authentication as having failed. Alternatively or additionally, the power transmitter may simply transmit a response message to the power receiver which contains an indication that no valid encrypted representation exists for the device identity of the power receiver and the power receiver may in response to this information designate the authentication as having failed. Thus, the power receiver may determine that the power transmitter has not been successfully authenticated.

The exact consequences of an authentication being determined to have failed or to be successful will depend on the preferences and requirements of the individual embodiment. In many embodiments, the power transmitter and/or power receiver will only allow a power transfer to be initialized if the other device has been successfully authorized. In some embodiments, power transfer may still be allowed but subject to a maximum power level that cannot be exceeded. In yet other embodiments, power transfer may proceed as normal but a warning alert may be generated and presented to the user.

After the initial operation, the power transmitter and the power receiver accordingly have both generated local copies of the first and second authentication keys, i.e. of $AK_p$ and $AK_s$. In order to consider an authentication to be successful, the devices accordingly need to verify that both devices have indeed generated corresponding keys. Specifically, in order for the power receiver to consider the power transmitter to be authenticated, it proceeds to check that the power transmitter has generated authentication keys that are identical to the ones generated by the power receiver. Similarly, in order for the power transmitter to consider the power receiver to be authenticated, it proceeds to check that the power receiver has generated authentication keys that are identical to the ones generated by the power transmitter.

An example of a verification process is illustrated in FIG. 7

The key verification process may specifically be based on one device generating a verification message using the locally generated authentication keys, $AK_p$ and $AK_s$, and transmitting it to the other device. The device receiving the verification message may then, based on the locally generated authentication keys, $AK_p$ and $AK_s$, try to verify the message, and thus determine whether it corresponds to a message than can be generated by the local authentication keys, $AK_p$ and $AK_s$. If so, the other device is considered to be authenticated and otherwise, the authentication process has failed.

As a specific example, the power receiver may in step 701 generate a data sequence and may modify this based on the authentication keys, $AK_p$ and $AK_s$, generated by the power receiver. The modified data sequence is then in step 703 included in the verification message and transmitted to the power transmitter for verification.

The modification may for example be by encrypting the data sequence based on the two authentication keys, $AK_p$ and $AK_s$. In such an example, the data sequence may be one that is already known at the power transmitter, such as a predetermined data sequence. As another example, the authentication keys, $AK_p$ and $AK_s$, may modify the data sequence by being added as watermarks to the sequence. Such an approach typically does not require the data sequence to be known by the power transmitter but may be applied to variable data. However, it tends to require the data sequence to be relatively long and accordingly tends to be less suited for limited bandwidth systems, such as wireless power transfer systems. As yet another example, the verification message may by the power receiver be generated to include a hash of the authentication keys, $AK_p$ and $AK_s$.

The power receiver may then transmit the verification message to the power transmitter.

The power transmitter may in step 703 proceed to seek to verify that the received verification message indeed includes data that would result from the data being generated using the authentication keys, $AK_p$ and $AK_s$, of the power transmitter. If this is the case, the authentication keys, $AK_p$ and $AK_s$, of the power receiver can be considered to be the same as the authentication keys, $AK_p$ and $AK_s$, generated by the power transmitter and thus the power transmitter can designate the authentication as successful and the power receiver as authenticated. It may e.g. then proceed to initialize a power transfer.

Specifically, if the verification message comprises an encrypted version of a data sequence, the power transmitter may proceed to decrypt the received encrypted data and compare it to a local copy of the unencrypted data sequence. If the decrypted sequence matches the local copy of the unencrypted data sequence, the verification, and thus the authentication is considered to be successful.

The local copy of the data sequence may in many embodiments be pre-stored, i.e. the data sequence may be a standardized, predetermined, and generally known sequence. However, in other embodiments, the data sequence may be one that is dynamically created for the authentication. For example, the data sequence may be generated by the device transmitting the verification message, e.g. as a random sequence. In addition to transmitting the encrypted version in the verification message, the originating device may also transmit a clear version of the data sequence. If the receiving device can decrypt the encrypted version of the data sequence to generate the clean version, the verification of the authentication keys is considered successful.

In some embodiments, the data sequence may be generated by the device that is performing the verification check. The data sequence may be transmitted to the device generating the verification message, and this device may encrypt the data sequence and return the encrypted data sequence using the locally generated authentication keys, $AK_p$ and $AK_s$. If the verifying device can decrypt the received encrypted data sequence and generate the original data sequence, the verification is considered successful.

In the case of the authentication keys, $AK_p$ and $AK_s$, being embedded in the data sequence as a watermark, the verifying device may simply extract the watermark and detect whether this watermark is the same as would be generated using the local authentication keys, $AK_p$ and $AK_s$, of the verifying device. If so, the verification is successful.

In the example of transmitting a hash of the authentication keys, $AK_p$ and $AK_s$, the verifying device may simple generate a hash from the locally generated authentication keys, $AK_p$ and $AK_s$, and check if this is identical to the received hash. If so, the verification is considered successful, and the authentication is considered successful.

Thus, in the example, one device generates a verification message comprising data which is dependent on the authentication keys, $AK_p$ and $AK_s$, generated at the device. The verification message is transmitted to the other device which proceeds to determine whether the authentication has failed or succeeded by performing a local verification based on the authentication keys, $AK_p$ and $AK_s$, generated at this device. The verification may essentially check whether the received verification message (or parts thereof) could have been generated from the authentication keys, $AK_p$ and $AK_s$, of the verifying device (e.g. using a predetermined encryption process). If so the verification, and the authentication is considered successful and otherwise it is considered to have failed.

In the example, a first of the devices, which in the following will be assumed to be the power receiver, may generate a verification data sequence C which may be generated for the specific authentication (or could e.g. be predetermined as previously described).

The power receiver may then proceed to modify the verification data sequence C to generate a modified verification data sequence M{C} where the modification M is based on the authentication keys, $AK_p$ and $AK_s$, of the power receiver (generated by the power receiver). Specifically, the power receiver may perform an encryption operation generating the verification data sequence M{C}.

In many embodiments, the encryption may be a sequential encryption comprising a first encryption based on the decrypted first authentication key followed by a second encryption based on the decrypted second authentication key, or vice versa. In this approach, two sequential encryptions of the verification data sequence C may be performed with the second encryption being performed on the result of the first encryption. The two encryptions may be the same operation (but based on the different keys) or may in some embodiments be different.

Thus, in some embodiments, the modified data sequence may be generated e.g. as:

$$M\{C\}= E\{AK_s\} \cdot [E\{AK_p\}\cdot[C]]$$

where $E\{k\} . [x]$ denotes the encryption operation of data sequence x based on key k.

The resulting data sequence is included in a verification message and transmitted to the power transmitter which extracts the received modified data sequence and seeks to perform the reverse operation using the locally generated authentication keys, $AK_p$ and $AK_s$:

$$C'=M^{-1}\{C'\}= E^{-1}\{AK_p\} \cdot [E^{-1}\{AK_s\}\cdot[C']]$$

where C' indicates the received/ decrypted data sequence. If this is identical to the original data sequence C, then the power receiver is considered authenticated by the power transmitter and otherwise it is considered that the authentication has failed.

It will be appreciated that the described approach may equally be performed in the reverse direction and thus the power transmitter may generate a data sequence C, modify it based on the authentication keys, $AK_p$ and $AK_s$, generated by the power transmitter, transmit the modified data to the power receiver in a verification message, and the power receiver may verify the received modified data message based on the authentication keys, $AK_p$ and $AK_s$, generated by the power receiver. Thus, the approach may be used to authenticate the power transmitter to the power receiver.

In many such embodiments, this approach may be performed in both directions using symmetric operations. However, in some embodiments, an asymmetry in the generation of the data sequence may advantageously be introduced.

Specifically, in many embodiments, one device may generate a data sequence, modify it, and transmit it to the other device. For example, as described above, the power receiver may generate the data sequence C, encrypt it sequentially based on first one of the authentication keys, $AK_p$ and $AK_s$, and then based on the other. The power transmitter may perform the reverse decryption operation and recreate the original data sequence.

In many embodiments, the data sequence may be dynamically generated by the power receiver and therefore unknown at the power transmitter. The power receiver may therefore also transmit the unencrypted data sequence to the power transmitter which may use this to check the decrypted version against.

However, in addition, the received information may also be used as the basis of the verification message which is transmitted to the power receiver. Thus, the data sequence generated by the power receiver may also be used by the power transmitter, and specifically this data sequence may be used by a sequential encryption based on the two authentication keys, $AK_p$ and $AK_s$, and then transmitted to the power receiver. The power receiver may decrypt the received encrypted data and then compare the result to the originally generated data sequence.

Such an approach may reduce communication overhead and complexity in many embodiments as the data sequence needs only be generated once and communicated once (and only in one direction which may be chosen as the one with the highest communication bandwidth). In some embodiments, the approach may also provide enhanced security.

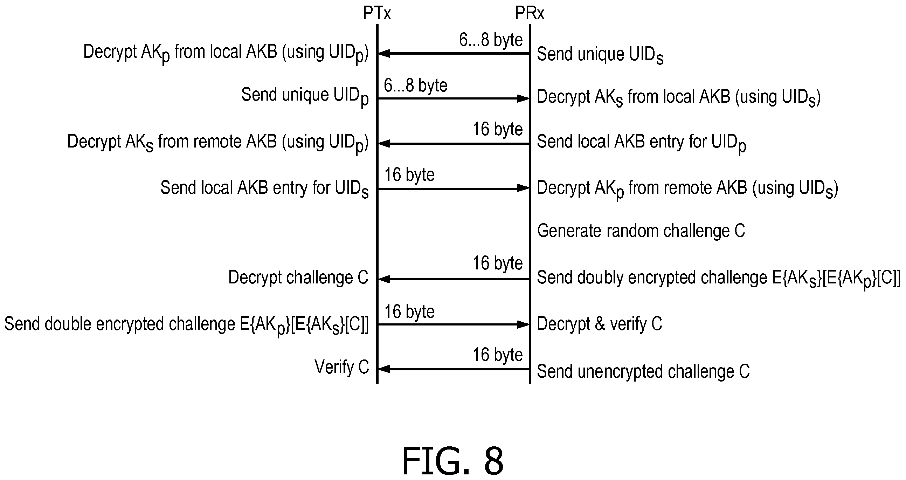

In the following, a specific example of an authentication process will be described with reference to FIG. 8 which shows an example of a message exchange between the power transmitter and the power receiver. In the example, the authentication process is initialized by the power receiver. The following steps/ messages are performed/ communicated:

(1) The power receiver sends is unique device identity ($UID_s$) to the power transmitter.
(2) On receipt of the power receiver's unique device identity, the power transmitter decrypts the authentication key $AK_p$ from its local authentication key block. For this it uses its own unique device identity ($UID_p$).
(3) Next, the power transmitter responds to the reception of the power receiver's unique device identity with its own unique device identity ($UID_p$).
(4) After receiving the UID from the power transmitter, the power receiver decrypts the authentication key $AK_s$ from its local authentication key block, using its own unique device identity ($UID_s$).
(5) Next, the power receiver uses the power transmitter's unique device identity to find the encrypted copy of the authentication $AK_s$ in its local authentication key block that the power transmitter should be able to decrypt using its set of device keys. If the power receiver cannot find an appropriate encrypted copy, it concludes that the power transmitter has been revoked, and fails the authentication process (and doesn't continue with the next steps in the protocol). Otherwise, its sends the encrypted copy to the power transmitter. The power receiver may further include an indication of the device key that the power transmitter should use to decrypt the authentication key, e.g. its level in the binary tree. This may be used by the power transmitter to differentiate between different possible device keys.

(6) The power transmitter decrypts the authentication key $AK_s$ from the received encrypted copy.

(7) Next, the power transmitter uses the power receiver unique device identity to find the encrypted copy of the authentication $AK_p$ in its local authentication key block that the power receiver should be able to decrypt using its set of device keys. If the power transmitter cannot find an appropriate encrypted copy, it concludes that the power receiver has been revoked, and fails the authentication process (and doesn't continue with the next steps in the protocol). Otherwise, its sends the encrypted copy to the power receiver. The power transmitter may further include an indication of the device key that the power receiver should use to decrypt the authentication key, e.g. its level in the binary tree. This may be used by the power receiver to differentiate between different possible device keys.

(8) The power receiver decrypts the authentication key $AK_p$ from the received encrypted copy.

(9) Next, the power receiver generates a random challenge data sequence, typically a 128-bit number.

(10) The power receiver first encrypts its challenge with the authentication key $AK_p$, which it received from the power transmitter, and then encrypts the result with its local authentication key $AK_s$. Subsequently it sends the doubly encrypted challenge to the power transmitter.

(11) The power transmitter decrypts the challenge.

(12) Next, the transmitter commutes the two encryptions by apply reapplying them in the reverse order, and sends the result back to the power receiver.

(13) The power receiver decrypts the challenge and verifies that is the same as the value that it generates in step (9). If that it is not the case, it fails the authentication process. Otherwise, it knows that the power transmitter has not been revoked (because it has access to the authentication keys from both authentication key blocks).

(14) Next, the power receiver sends the unencrypted challenge to the power transmitter.

(15) The power transmitter verifies that the received value is identical to the decrypted value in step (11). If that it is not the case, it fails the authentication process. Otherwise, it knows that the power receiver has not been revoked (because it has access to the authentication keys from both authentication key blocks).

It will be appreciated that many variations to the above example may be implemented. For example, some of the steps in the above protocol may be executed in a different order. For example, both the power receiver and power transmitter may decrypt the authentication keys from their local AKBs before or after sending their unique ID. Instead of the power receiver initiating the protocol, the power transmitter may start. Similarly, instead on the power receiver generating the random challenge, the power transmitter may perform this action. In addition, the order of the encryptions in the doubly encrypted challenge may be reversed, e.g. the power receiver encrypts the challenge first with its local authentication key $AK_s$ and next with the remote authentication key $AK_p$.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed, the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

It will be appreciated that the reference to a preferred value does not imply any limitation beyond it being the value determined in the foreign object detection initialization mode, i.e. it is preferred by virtue of it being determined in the adaptation process. The references to a preferred value could be substituted for references to e.g. a first value.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus, references to "a", "an", "first", "second" etc. do not preclude a plurality. Reference signs in the claims are provided merely as a clarifying example shall not be construed as limiting the scope of the claims in any way.

**Claims**

1. A method of authentication for a wireless power transfer system comprising a power receiver (105) and a power transmitter (101) wirelessly providing power to the power receiver (105) via an inductive power transfer signal,

   the power transmitter (101) comprising a first communicator (305) for communicating with the power receiver (105) and the power receiver (105) comprising a second communicator for communication with the power transmitter (101),

   the power transmitter (101) having a first memory (309) storing a first authentication key block comprising an encrypted representation of a first authentication key for each of a first plurality of device identities, an encrypted representation of the first authentication key for a device identity of the first plurality of device identities being encrypted by a device key linked to the device identity;

   the power receiver (105) having a second memory (409) storing a second authentication key block comprising an encrypted representation of a second authentication key for each of a second plurality of device identities, an encrypted representation of the second authentication key for a device identity of the second plurality of device identities being encrypted by a device key linked to the device identity;

   the method comprising:

   the power transmitter performing the steps of:

   providing a decrypted first authentication key corresponding to the first authentication key;

   communicating (503) with the power receiver to retrieve a first encrypted representation of the second authentication key from the second memory (409), the second encrypted representation of the second authentication key being an encrypted representation of the second authentication key of the second authentication key block for a device identity of the power transmitter (101);

   generating (507) a decrypted second authentication key by decrypting the first encrypted representation of the second authentication key using a device key of the power transmitter (101); and

   the power receiver performing the steps of:

   providing a decrypted second authentication key corresponding to the second authentication key;

   communicating (603) with the power transmitter (101) to retrieve a second encrypted representation of the first authentication key from the first memory (309), the second encrypted representation of the first authentication key being an encrypted representation of the first authentication key of the first authentication key block for a device identity of the power receiver (105);

   generating (605) a decrypted first authentication key by decrypting the second encrypted representation of the first authentication key using a device key of the power receiver (105); and

   a first device being one of the power transmitter (101) and the power receiver (105) generating (701) a verification message based on the decrypted first authentication key and the decrypted second authentication key of the first device;

   the first device transmitting (703) the verification message to a second device of the power transmitter (101) and the power receiver (105);

   the second device determining (705) whether an authentication of the first device has failed or succeeded in response to a verification of the verification message, the verification being based on the decrypted first authentication key and the decrypted second authentication key of the second device.

2. The method of claim 1 wherein the step of the power transmitter providing the decrypted first authentication key comprises:

   retrieving (501) a first encrypted representation of the first authentication key from the first memory (309), the first encrypted representation of the first authentication key being an encrypted representation of the first authentication key of the first authentication key block for a device identity of the power transmitter (101); and generating (505) the decrypted first authentication key by decrypting the first encrypted representation of the first authentication key using the device key of the power transmitter (101).

3. The method of claim 1 wherein the step of the power receiver providing the decrypted second authentication key comprises:

retrieving (601) a second encrypted representation of the second authentication key from the second memory (409), the second encrypted representation of the second authentication key being an encrypted representation of the second authentication key of the second authentication key block for a device identity of the power receiver (105); generating (607) a decrypted second authentication key by decrypting the second encrypted representation of the second authentication key using the device key of the power receiver (105).

4. The method of any previous claim further comprising the step of designating the authentication as a failed authentication in response at least one of a detection that the first authentication key block does not comprise a valid encrypted representation of the first authentication key for the device identity of the power receiver (105); and a detection that the second authentication key block does not comprise a valid encrypted representation of the second authentication key for the device identity of the power transmitter (101).

5. The method of any previous claim wherein the step of the power transmitter (101) communicating with the power receiver (105) to retrieve the first encrypted representation of the second authentication key comprises:

the power receiver (105) performing the steps of:

retrieving the first encrypted representation of the second authentication key from the second authentication key block; generating a first message to include the first encrypted representation of the second authentication key retrieved from the second authentication key block; and transmitting the first message to the power transmitter (101) and the power transmitter (101) performing the steps of:

receiving the first message; extracting the first encrypted representation of the second authentication key from the first message.

6. The method of any previous claim wherein the first device performs the steps of generating a verification data sequence; generating a modified verification data sequence by applying a first modification operation to the verification data sequence based on the first authentication key and the second authentication key of the first device; including the modified verification data sequence in the verification message; the second device is arranged to extracting a received modified verification data sequence from the received verification message; and determining that the authentication has succeeded in response to a detection that the received modified verification data sequence corresponds to applying the first modification operation to the verification data sequence based on the decrypted first authentication key and the decrypted second authentication key of the second device.

7. The method of claim 6 further comprising the first device transmitting the verification data sequence to the second device.

8. The method of any of the claims 6 and 7 wherein the first modification operation comprises an encryption of the verification data sequence based on the first authentication key and the second authentication key of the first device, and the second device detecting that the received modified verification data sequence corresponds to applying the first modification operation to the verification data sequence based on the first authentication key and the decrypted second authentication key of the second device comprises generating a decrypted verification data sequence by decrypting the received modified verification data sequence based on the first authentication key and the decrypted second authentication key of the second device, and comparing the decrypted verification data sequence to the verification data sequence.

9. The method of any of the claims 6-8 wherein the second device performs the steps of:

generating a second modified verification data sequence by applying a second modification operation to the verification data sequence based on the first authentication key and the second authentication key of the second device; including the second modified verification data sequence in a second verification message; and transmitting the second verification message to the first device; and

the first device performs the steps of
receiving the second verification message;
extracting a received second modified verification data sequence from the received second verification message;
and determining that the authentication of the second device has succeeded in response to a detection that the received second modified verification data sequence corresponds to applying the second modification operation to the verification data sequence based on the decrypted first authentication key and the decrypted second authentication key of the first device.

10. The method of claim 9 wherein the second device is arranged to generate the verification data sequence by decrypting the first received modified verification data sequence based on the decrypted first authentication key and the decrypted second authentication key of the second device.

11. The method of claim 9 or 10 wherein the first modification operation is a sequential encryption comprising a first encryption based on the decrypted first authentication key and a second encryption based on the decrypted second authentication key.

12. A method of authentication for a wireless power transmitter wirelessly providing power to a power receiver (105) via an inductive power transfer signal, the power transmitter (101) having a first memory (309) storing a first authentication key block comprising an encrypted representation of a first authentication key for each of a first plurality of device identities, an encrypted representation of the first authentication key for a device identity of the first plurality of device identities being encrypted by a device key linked to the device identity;
the method comprising:

   providing a decrypted first authentication key corresponding to the first authentication key;
   communicating (503) with the power receiver to retrieve a first encrypted representation of a second authentication key, the second encrypted representation of the second authentication key being an encrypted representation of the second authentication key of a second authentication key block for a device identity of the power transmitter (101), the second authentication key block comprising an encrypted representation of the second authentication key for each of a second plurality of device identities, an encrypted representation of the second authentication key for a device identity of the second plurality of device identities being encrypted by a device key linked to the device identity;

generating (507) a decrypted second authentication key by decrypting the first encrypted representation of the second authentication key using a device key of the power transmitter (101);
receiving a verification message, the verification message comprising verification data; and
determining (705) whether an authentication of the power receiver has failed or succeeded in response to a verification of the verification data, the verification being based on the decrypted first authentication key and the decrypted second authentication key of the power transmitter.

13. A method of authentication for a wireless power receiver (101) wirelessly receiving power from a power transmitter (101) via an inductive power transfer signal, the power receiver (105) having a memory (409) storing a second authentication key block comprising an encrypted representation of a second authentication key for each of a second plurality of device identities, an encrypted representation of the second authentication key for a device identity of the second plurality of device identities being encrypted by a device key linked to the device identity; and
the method comprising:

   providing a decrypted second authentication key corresponding to the second authentication key;
   communicating (603) with the power transmitter (101) to retrieve an encrypted representation of a first authentication key, the encrypted representation of the first authentication key being an encrypted representation of the first authentication key of a first authentication key block for a device identity of the power receiver (105), the first authentication key block comprising an encrypted representation of the first authentication key for each of a first plurality of device identities, an encrypted representation of the first authentication key for a device identity of the first plurality of device identities being encrypted by a device key linked to the device identity;
   generating (605) a decrypted first authentication key by decrypting the encrypted representation of the first authentication key using a device key of the power receiver (105);
   receiving a verification message, the verification message comprising verification data;
   determining (705) whether an authentication of the power transmitter has failed or succeeded in response to a verification of the verification data, the verification being based on the decrypted first authentication key and the decrypted second authentication key of the power receiver (105).

14. A wireless power transfer system comprising a power receiver (105) and a power transmitter (101) arranged to wirelessly provide power to the power receiver (105) via an inductive power transfer signal, wherein:

the power transmitter (101) comprises:

a first communicator (305) for communicating with the power receiver (105);
a first memory (309) storing a first authentication key block comprising an encrypted representation of a first authentication key for each of a first plurality of device identities, an encrypted representation of the first authentication key for a device identity of the first plurality of device identities being encrypted by a device key linked to the device identity;

and the power receiver (105) comprises:

a second communicator for communication with the power transmitter (101),
a second memory (409) storing a second authentication key block comprising an encrypted representation of a second authentication key for each of a second plurality of device identities, an encrypted representation of the second authentication key for a device identity of the second plurality of device identities being encrypted by a device key linked to the device identity; and

the power transmitter is arranged to perform the steps of:

providing a decrypted first authentication key corresponding to the first authentication key;
communicating (503) with the power receiver to retrieve a first encrypted representation of the second authentication key from the second memory (409), the second encrypted representation of the second authentication key being an encrypted representation of the second authentication key of the second authentication key block for a device identity of the power transmitter (101);
generating (507) a decrypted second authentication key by decrypting the first encrypted representation of the second authentication key using a device key of the power transmitter (101); and

the power receiver is arranged to perform the steps of:

providing a decrypted second authentication key corresponding to the second authentication key;
communicating (603) with the power transmitter (101) to retrieve a second encrypted representation of the first authentication key from the first memory (309), the second encrypted representation of the first authentication key being an encrypted representation of the first authentication key of the first authentication key block for a device identity of the power receiver (105);
generating (605) a decrypted first authentication key by decrypting the second encrypted representation of the first authentication key using a device key of the power receiver (105);
and wherein
a first device being one of the power transmitter (101) and the power receiver (105) is arranged to generate (701) a verification message based on the decrypted first authentication key and the decrypted second authentication key of the first device;

the first device is arranged to transmit (703) the verification message to a second device of the power transmitter (101) and the power receiver (105); and
the second device is arranged to determine (705) whether an authentication of the first device has failed or succeeded in response to a verification of the verification message, the verification being based on the decrypted first authentication key and the decrypted second authentication key of the second device.

15. A power transmitter wirelessly for providing power to a power receiver (105) via an inductive power transfer signal, the power transmitter (101) comprising:

a first memory (309) storing a first authentication key block comprising an encrypted representation of a first authentication key for each of a first plurality of device identities, an encrypted representation of the first authentication key for a device identity of the first plurality of device identities being encrypted by a device key linked to the device identity; and
an authenticator arranged to perform the steps of:

providing a decrypted first authentication key corresponding to the first authentication key;
communicating (503) with the power receiver to retrieve a first encrypted representation of a second authentication key, the second encrypted representation of the second authentication key being an encrypted representation of the second authentication key of a second authentication key block for a device identity of the power transmitter (101), the second authentication key block comprising an encrypted representation of the second authentication key for each of a second plurality of device identities, an encrypted representation of the second authentication key for a device identity of the second plurality of device identities being encrypted by a device key linked to the device identity;

generating (507) a decrypted second authentication key by decrypting the first encrypted representation of the second authentication key using a device key of the power transmitter (101);

receiving a verification message, the verification message comprising verification data;

determining (705) whether an authentication of the power receiver has failed or succeeded in response to a verification of the verification data, the verification being based on the decrypted first authentication key and the decrypted second authentication key of the power transmitter (101).

## FIG. 1

## FIG. 2

FIG. 3

FIG. 4

501 — RET E[AK$_p$]

503 — RET E[AK$_s$]

505 — DECR E[AK$_s$]

507 — DECR E[AK$_p$]

# FIG. 5

601 — RET E[AK$_s$]

603 — RET E[AK$_p$]

605 — DECR E[AK$_s$]

607 — DECR E[AK$_p$]

# FIG. 6

701 — Gen Ver MSG

703 — Tx Ver MSG

705 — Chk Ver MSG

# FIG. 7

EP 3 462 571 A1

PTx                                                              PRx

Decrypt AK$_p$ from local AKB (using UID$_p$) ←——— 6...8 byte ——— Send unique UID$_s$

Send unique UID$_p$ ——— 6...8 byte ———→ Decrypt AK$_s$ from local AKB (using UID$_s$)

Decrypt AK$_s$ from remote AKB (using UID$_p$) ←——— 16 byte ——— Send local AKB entry for UID$_p$

Send local AKB entry for UID$_s$ ——— 16 byte ———→ Decrypt AK$_p$ from remote AKB (using UID$_s$)

Generate random challenge C

Decrypt challenge C ←——— 16 byte ——— Send doubly encrypted challenge E{AK$_s$}[E{AK$_p$}[C]]

Send double encrypted challenge E{AK$_p$}[E{AK$_s$}[C]] ——— 16 byte ———→ Decrypt & verify C

Verify C ←——— 16 byte ——— Send unencrypted challenge C

# FIG. 8

Europäisches
Patentamt

European
Patent Office

Office européen
des brevets

# EUROPEAN SEARCH REPORT

Application Number

EP 17 19 3645

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/256980 A1 (SINGH MANJIT [US] ET AL) 7 September 2017 (2017-09-07) * the whole document * ----- | 1-15 | INV. H02J50/00 |
| A | US 2017/085117 A1 (OTA HIROSHI [JP] ET AL) 23 March 2017 (2017-03-23) * the whole document * ----- | 1,12-15 | |
| A | US 2017/170687 A1 (WU YONGWEI [CN] ET AL) 15 June 2017 (2017-06-15) * the whole document * ----- | 1,12-15 | |

TECHNICAL FIELDS
SEARCHED      (IPC)

H02J

The present search report has been drawn up for all claims

| Place of search | Date of completion of the search | Examiner |
|---|---|---|
| Munich | 23 February 2018 | Tille, Daniel |

EPO FORM 1503 03.82 (P04C01)

## ANNEX TO THE EUROPEAN SEARCH REPORT
## ON EUROPEAN PATENT APPLICATION NO.

EP 17 19 3645

This annex lists the patent family members relating to the patent documents cited in  the above-mentioned European search report.
The members are as contained in the European Patent Office EDP file on
The European Patent Office is in no way liable for these particulars which are merely given for the purpose of information.

23-02-2018

| Patent document cited in search report | Publication date | Patent family member(s) | Publication date |
|---|---|---|---|
| US 2017256980 A1 | 07-09-2017 | NONE | |
| US 2017085117 A1 | 23-03-2017 | NONE | |
| US 2017170687 A1 | 15-06-2017 | CN 106465044 A<br>EP 3146743 A1<br>TW 201603551 A<br>US 2017170687 A1<br>WO 2015176246 A1 | 22-02-2017<br>29-03-2017<br>16-01-2016<br>15-06-2017<br>26-11-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2002060116 A2